# EUROPEAN PATENT SPECIFICATION

(11) **EP 4 145 242 B1**
(45) Date of publication and mention of the grant of the patent: **10.07.2024**
(21) Application number: 22193345.0
(22) Date of filing: 31.08.2022
(51) Int. Cl.: G05D 1/00, G06N 3/092, B60W 60/00

(54) **PERCEPTION FIELD BASED DRIVING RELATED OPERATIONS**
WAHRNEHMUNGSFELDBASIERTE FAHRBEZOGENE OPERATIONEN
OPÉRATIONS LIÉES À LA CONDUITE SUR LA BASE D'UN CHAMP DE PERCEPTION

(30) Priority: 01.09.2021 US 202163260839 P
(43) Date of publication of application: 08.03.2023
(73) Proprietor: Autobrains Technologies LTD., 6713701 Tel Aviv (IL)
(72) Inventor: Raichelgauz, Igal, 6713701 Tel Aviv-Yafo (IL); Engelsoy, Julius, 6713701 Tel Aviv-Yafo (IL); Biess, Armin, 6713701 Tel Aviv-Yafo (IL); Misri, Isaac, 6713701 Tel Aviv-Yafo (IL)
(74) Representative: Fragala, Riccardo

(56) References cited:
- CN-B- 107 632 614
- US-A1- 2018 059 685
- US-A1- 2019 101 930

## Description

### BACKGROUND

Autonomous vehicles (AVs) could help vastly reduce the number of traffic accidents and CO₂ emissions as well as contribute to a more efficient transportation system. However, today's candidate AV technologies are not scalable in the following three ways:

Limited field of view, lighting and weather challenges, and occlusions all lead to detection error and noisy localization/kinematics. In order to deal with such poor real-world perception output, one approach to AV technology is to invest in expensive sensors and/or to integrate specialized infrastructure into the road network. However, such an endeavor is very costly and-in the case of infrastructure-geographically limited, and therefore cannot lead to generally accessible AV technology.

AV technology which is not based on costly hardware and infrastructure relies entirely on machine learning and hence data to handle real-world situations. In order to deal with detection error as well as to learn a good enough driving policy for the complex task of driving, a vast amount of data and computational resources are required and still there are edge cases that are not handled correctly. The common denominator in these edge cases is that the machine learning model does not generalize well to unseen or confusing situations and due to the black-box nature of deep neural networks it is difficult to analyze faulty behavior.

Current road-ready automated driving is implemented in the form of separate ADAS functions such as ACC, AEB, and LCA. To arrive at fully autonomous driving would require seamlessly joining existing ADAS functions together as well as covering any currently non-automated gaps by adding more such functions (e.g. lane change, intersection handling etc.). In short, current automated driving is not based on a holistic approach that can readily be extended to produce full autonomous driving. CN 107 632 614 B discloses an approach which provides the avoiding a (single) obstacle (by a leader of a fleet of UAVs) that is provided (in advance) with a trajectory to be followed. The avoidance is executed by calculating various forces (only one of which is a virtual force related to the obstacle) a normal repulsive force from the obstacle.

### BRIEF DESCRIPTION OF THE DRAWINGS

The embodiments of the disclosure will be understood and appreciated more fully from the following detailed description, taken in conjunction with the drawings in which:
FIG. 1 illustrates an example of a method;
FIG. 2 illustrates an example of a method;
FIG. 3 illustrates an example of a method;
FIG. 4 illustrates an example of a method;
FIG. 5 is an example of a vehicle; and
FIGs. 6-8 illustrate examples of method.

### DESCRIPTION OF EXAMPLE EMBODIMENTS

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

Because the illustrated embodiments of the present invention may for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

Any reference in the specification to a method should be applied mutatis mutandis to a device or system capable of executing the method and/or to a non-transitory computer readable medium that stores instructions for executing the method.

Any reference in the specification to a system or device should be applied mutatis mutandis to a method that may be executed by the system, and/or may be applied mutatis mutandis to non-transitory computer readable medium that stores instructions executable by the system.

Any reference in the specification to a non-transitory computer readable medium should be applied mutatis mutandis to a device or system capable of executing instructions stored in the non-transitory computer readable medium and/or may be applied mutatis mutandis to a method for executing the instructions.

Any combination of any module or unit listed in any of the figures, any part of the specification and/or any claims may be provided.

Any one of the units and/or modules that are illustrated in the application, may be implemented in hardware and/or code, instructions and/or commands stored in a non-transitory computer readable medium, may be included in a vehicle, outside a vehicle, in a mobile device, in a server, and the like.

The vehicle may be any type of vehicle that a ground transportation vehicle, an airborne vehicle, and a water vessel.

The specification and/or drawings may refer to an image. An image is an example of a media unit. Any reference to an image may be applied mutatis mutandis to a media unit. A media unit may be an example of sensed information. Any reference to a media unit may be applied mutatis mutandis to any type of natural signal such as but not limited to signal generated by nature, signal representing human behavior, signal representing operations related to the stock market, a medical signal, financial series, geodetic signals, geophysical, chemical, molecular, textual and numerical signals, time series, and the like. Any reference to a media unit may be applied mutatis mutandis to sensed information. The sensed information may be of any kind and may be sensed by any type of sensors - such as a visual light camera, an audio sensor, a sensor that may sense infrared, radar imagery, ultrasound, electro-optics, radiography, LIDAR (light detection and ranging), etc. The sensing may include generating samples (for example, pixel, audio signals) that represent the signal that was transmitted, or otherwise reach the sensor.

The specification and/or drawings may refer to a processor. The processor may be a processing circuitry. The processing circuitry may be implemented as a central processing unit (CPU), and/or one or more other integrated circuits such as application-specific integrated circuits (ASICs), field programmable gate arrays (FPGAs), full-custom integrated circuits, etc., or a combination of such integrated circuits.

Any combination of any steps of any method illustrated in the specification and/or drawings may be provided.

Any combination of any subject matter of any of claims may be provided.

Any combinations of systems, units, components, processors, sensors, illustrated in the specification and/or drawings may be provided.

Any reference to an object may be applicable to a pattern. Accordingly - any reference to object detection is applicable mutatis mutandis to a pattern detection.

Although successful driving is contingent upon circumnavigating surrounding road objects based on their location and movement, humans are notoriously bad at estimating kinematics. We suspect that humans employ an internal representation of surrounding objects in the form of virtual force fields that immediately imply action, thus circumventing the need for kinematics estimation. Consider a scenario in which the ego vehicle drives in one lane and a vehicle diagonally in front in an adjacent lane starts swerving into the ego lane. The human response to brake or veer off would be immediate and instinctive and can be experienced as a virtual force repelling the ego from the swerving vehicle. This virtual force representation is learned and associated with the specific road object.

Inspired by the above considerations we propose the novel concept of perception fields. Perception fields are a learned representation of road objects in the form of a virtual force field that is "sensed" through the control system of the ego vehicle in the form of ADAS and/or AV software. A field is here defined as a mathematical function which depends on spatial position (or an analogous quantity)

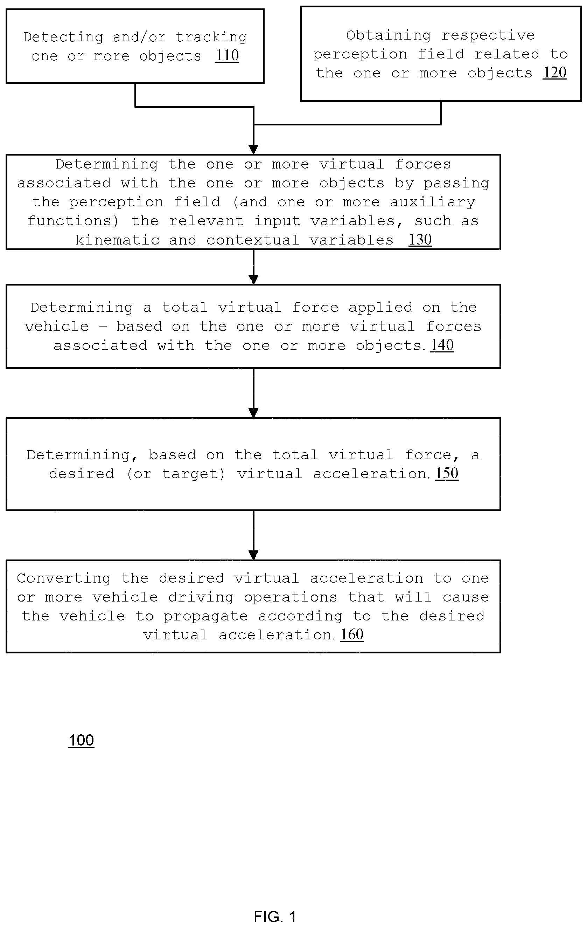

An example of an inference method 100 is illustrated in figure 1 and include:

Method 100 may be executed per one or more frames of an environment of the vehicle.

Step 110 of method 100 may include detecting and/or tracking one or more objects (including, for example, one or more road users). The detecting and/or tracking may be done in any manner. The one or more objects may be any object that may affect the behavior of the vehicle. For example - a road user (pedestrian, another vehicle), the road and/or path on which the vehicle is progressing (for example the state of the road or path, the shape of the road - for example a curve, straight road segments, and the like), traffic signs, traffic light, road crossings, a school, a kindergarten, and the like. Step 110 may include obtaining additional information such as kinematic and contextual variables related to the one or more objects. The obtaining may include receiving or generating. The obtaining may include processing the one or more frames to generate the kinematic and contextual variables.

It should be noted that step 110 may include obtaining he kinematic variables (even without obtaining the one or more frames).

Method 100 may also include step 120 of obtaining respective perception field related to the one or more objects. Step 120 may include determining which mapping between objects should be retrieved and/or used, and the like.

Step 110 (and even step 120) may be followed by step 130 of determining the one or more virtual forces associated with the one or more objects by passing the perception field (and one or more virtual physical model functions) the relevant input variables, such as kinematic and contextual variables.

Step 130 may be followed by step 140 of determining a total virtual force applied on the vehicle - based on the one or more virtual forces associated with the one or more objects. For example - step 140 may include performing a vector weighted sum (or other function) on the one or more virtual forces associated with the one or more objects.

Step 140 may be followed by step 150 of determining, based on the total virtual force, a desired (or target) virtual acceleration - for example based on the equivalent of Newton's second law. The desired virtual acceleration may be a vector - or otherwise have a direction.

Step 150 may be followed by step 160 of converting the desired virtual acceleration to one or more vehicle driving operations that will cause the vehicle to propagate according to the desired virtual acceleration.

For example - step 160 may include translating the desired acceleration to acceleration or deceleration or changing direction of progress of the vehicle - using gas pedal movement, brake pedal movement and/or steering wheel angle. The translation may be based on a dynamics model of the vehicle with a certain control scheme.

The advantages of perception fields include, for example - explainability, generalizability and a robustness to noisy input.

Explainability. Representing ego movement as the composition of individual perception fields implies decomposing actions into more fundamental components and is in itself a significant step towards explainability. The possibility to visualize these fields and to apply intuition from physics in order to predict ego motion represent further explainability as compared to common end-to-end, black-box deep learning approaches. This increased transparency also leads to passengers and drivers being able to trust AV or ADAS technology more.

Generalizability. Representing ego reactions to unknown road objects as repellant virtual force fields constitutes an inductive bias in unseen situations. There is a potential advantage to this representation in that it can handle edge cases in a safe way with less training. Furthermore, the perception field model is holistic in the sense that the same approach can be used for all aspects of the driving policy. It can also be divided into narrow driving functions to be used in ADAS such as ACC, AEB, LCA etc. Lastly, the composite nature of perception fields allows the model to be trained on atomic scenarios and still be able to properly handle more complicated scenarios.

Robustness to noisy input: Physical constraints on the time evolution of perception fields in combination with potential filtering of inputs may lead to better handling of noise in the input data as compared to pure filtering of localization and kinematic data.

Physical or virtual forces allow for a mathematical formulation - for example - in terms of a second order ordinary differential equation comprising a so called dynamical system. The benefits of representing a control policy as such is that it is susceptible to intuition from the theory of dynamical systems and it is a simple matter to incorporate external modules such as prediction, navigation, and filtering of in- puts/outputs.

An additional benefit to the perception field approach is that it is not dependent on any specific hardware, and not computationally more expensive than existing methods.

### Training process

The process for learning perception fields can be of one of two types or a combination thereof, namely behavioral cloning (BC) and reinforcement learning (RL). BC approximates the control policy by fitting a neural network to observed human state-action pairs whereas RL entails learning by trial and error in a simulation environment without reference to expert demonstrations.

One can combine these two classes of learning algorithms by first learning a policy through BC to use it as an initial policy to be fine-tuned using RL. Another way to combine the two approaches is to first learn the so called reward function (to be used in RL) through behavioral cloning to infer what constitutes desirable behavior to humans, and later to train through trial and error using regular RL. This latter approach goes under the name of inverse RL (IRL).

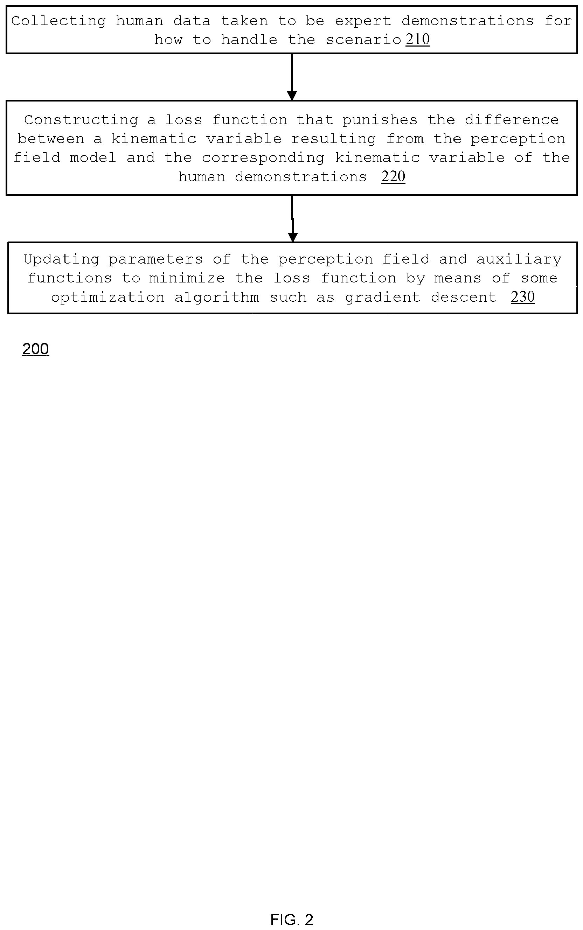

Figure 2 is an example of a training method 200 employed for learning through BC.

Method 200 may start by step 210 of collecting human data taken to be expert demonstrations for how to handle the scenario.

Step 210 may be followed by step 220 of constructing a loss function that punishes the difference between a kinematic variable resulting from the perception field model and the corresponding kinematic variable of the human demonstrations.

Step 220 may be followed by step 230 of updating parameters of the perception field and auxiliary functions (that may be virtual physical model functions that differ from perception fields) to minimize the loss function by means of some optimization algorithm such as gradient descent.

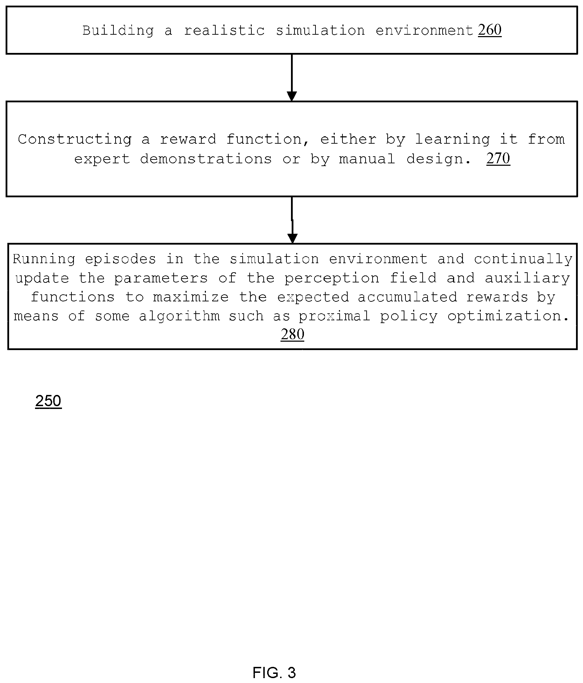

Figure 3 is an example of a training method 250 employed for reinforcement learning.

Method 250 may start by step 260 of building a realistic simulation environment.

Step 260 may be followed by step 270 of constructing a reward function, either by learning it from expert demonstrations or by manual design.

Step 270 may be followed by step 280 of running episodes in the simulation environment and continually update the parameters of the perception field and auxiliary functions to maximize the expected accumulated rewards by means of some algorithm such as proximal policy optimization.

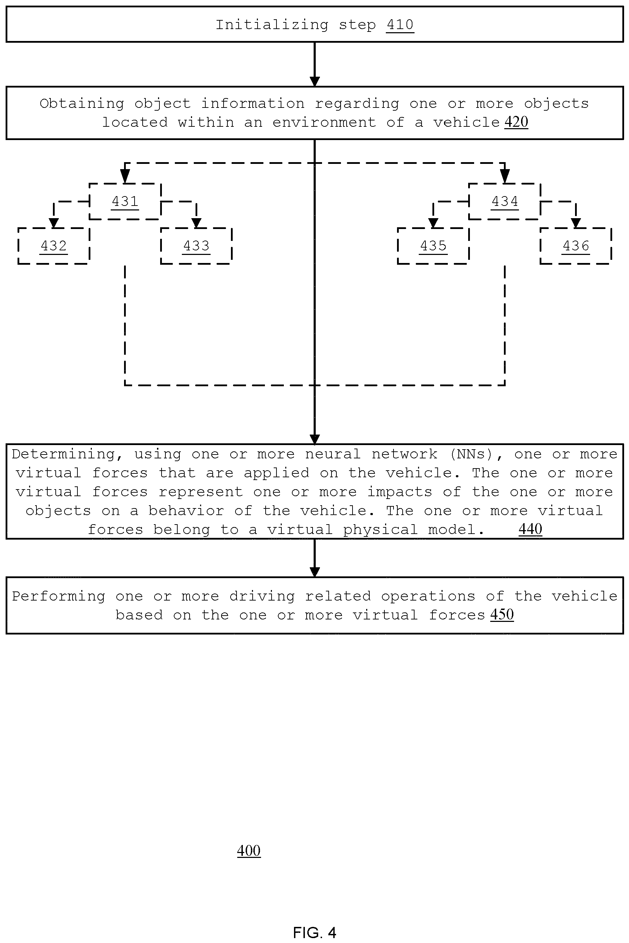

Figure 4 illustrates an example of method 400.

Method 400 may be for perception fields driving related operations.

Method 400 may start by initializing step 410.

Initializing step 410 may include receiving a group of NNs that are trained to execute step 440 of method 400.

Alternatively, step 410 may include training a group of NNs that to execute step 440 of method 400.

Various example of training the group of NNs are provided below.
- The group of NNs may be trained to map the object information to the one or more virtual forces using behavioral cloning.
- The group of NNs may be trained to map the object information to the one or more virtual forces using reinforcement learning.
- The group of NNs may be trained to map the object information to the one or more virtual forces using a combination of reinforcement learning and behavioral cloning.
- The group of NNs may be trained to map the object information to the one or more virtual forces using a reinforcement learning that has a reward function that is defined using behavioral cloning.
- The group of NNs may be trained to map the object information to the one or more virtual forces using reinforcement learning that has an initial policy that is defined using behavioral cloning.
- The group of NNs may be trained to map the object information to the one or more virtual forces and to one or more virtual physical model functions that differ from the perception fields.
- The group of NN may include a first NN and a second NN, wherein the first NN is trained to map the object information to the one or more perception fields and the second NN was trained to map the object information to the one or more virtual physical model functions.

Initializing step 410 may be followed by step 420 of obtaining object information regarding one or more objects located within an environment of a vehicle. Step 410 may be repeated multiple times - and the following steps may also be repeated multiple times. The object information may include video, images, audio, or any other sensed information.

Step 420 may be followed by step 440 of determining, using one or more neural networks (NNs), one or more virtual forces that are applied on the vehicle.

The one or more NNs may be the entire group of NNs (from initialization step 410) or may be only a part of the group of NNs - leaving one or more non-selected NNs of the group.

The one or more virtual forces represent one or more impacts of the one or more objects on a behavior of the vehicle. The impact may be a future impact or a current impact. The impact may cause the vehicle to change its progress.

The one or more virtual forces belong to a virtual physical model. The virtual physical model is a virtual model that may virtually apply rules of physics (for example mechanical rules, electromagnetic rules, optical rules) on the vehicle and/or the objects.

Step 440 may include at least one of the following steps:
- Calculating, based on the one or more virtual forces applied on the vehicle, a total virtual force that is applied on the vehicle.
- Determining a desired virtual acceleration of the vehicle based on an total virtual acceleration that is applied on the vehicle by the total virtual force. The desired virtual acceleration may equal the total virtual acceleration - or may differ from it.

Method 400 may also include at least one of step 431, 432, 433, 434, 435 and 436.

Step 431 may include determining a situation of the vehicle, based on the object information.

Step 431 may be followed by step 432 of selecting the one or more NNs based on the situation.

Additionally or alternatively, step 431 may be followed by step 433 of feeding the one or more NNs with situation metadata.

Step 434 may include detecting a class of each one of the one or more objects, based on the object information.

Step 434 may be followed by step 435 of selecting the one or more NNs based on a class of at least one object of the one or more objects.

Additionally or alternatively, step 434 may be followed by step 436 of feeding the one or more NNs with class metadata indicative of a class of at least one object of the one or more objects.

Step 440 may be followed by step 450 of performing one or more driving related operations of the vehicle based on the one or more virtual forces.

Step 450 may be executed without human driver intervention and may include changing the speed and/or acceleration and/or the direction of progress of the vehicle. This may include performing autonomous driving or performing advanced driver assistance system (ADAS) driving operations that may include momentarily taking control over the vehicle and/or over one or more driving related unit of the vehicle. This may include setting, with or without human driver involvement, an acceleration of the vehicle to the desired virtual acceleration.

Step 440 may include suggesting to a driver to set an acceleration of the vehicle to the desired virtual acceleration.

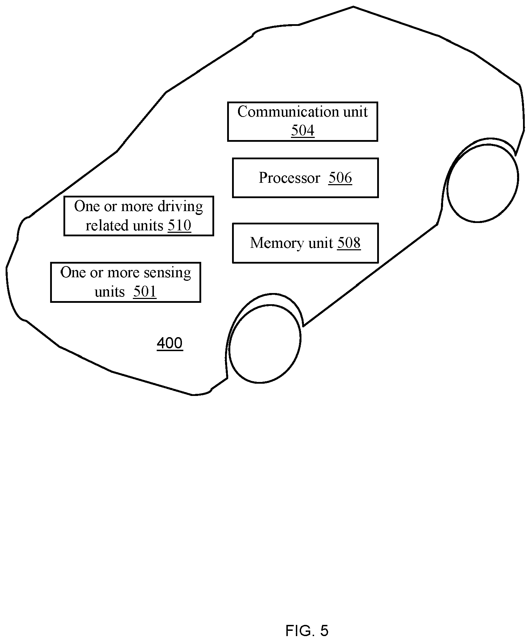

Figure 5 is an example of a vehicle. The vehicle may include one or more sensing units 501, one or more driving related units 510(such as autonomous driving units, ADAS units, and the like), a processor 560 configured to execute any of the methods, a memory unit 508 for storing instructions and/or method results, functions and the like, and a communication unit 504 for in-vehicle and/or out-of-vehicle communication.

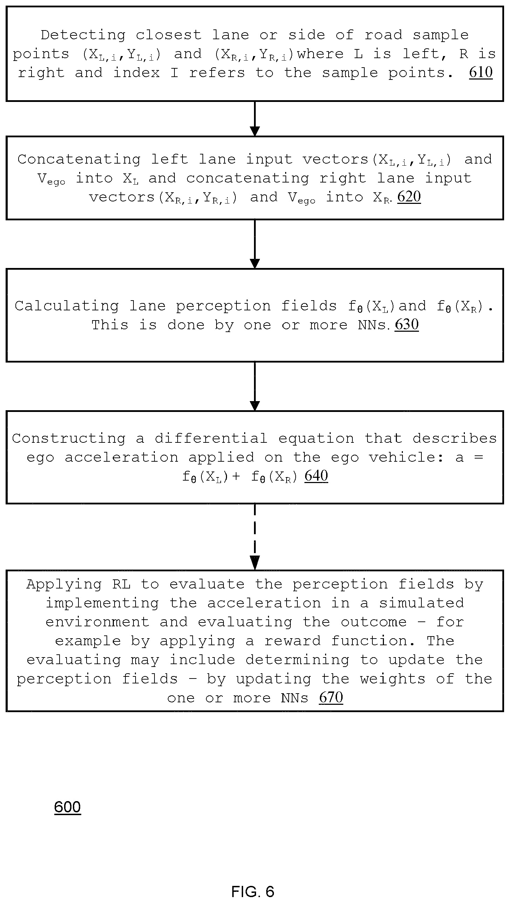

Figure 6 illustrate examples of a method 600 for lane centering RL with lane sample points as inputs. The lane sample points are located within the environment of the vehicle.

Figure 6 illustrate inference steps 610-640 (some of which may involve utilizing one or more NNs), and step 670 that involves using RL to adjust the perception fields calculated by the one or more NNs. RL may change the perception fields calculated by the one or more NNs.

RL assumes a simulation environment that generated input data in which an agent (ego vehicle) can implement its learned policy (perception fields).

Method 600 may start by step 610 of detecting closest lane or side of road sample points (X_{L,i}, Y_{L,i}) and (X_{R,i}, Y_{R,i}) where L is left, R is right and index i refers to the sample points. The velocity of the ego vehicle (previously referred to as the vehicle) is denoted V_{ego}.

Step 610 may be followed by step 620 of concatenating left lane input vectors (X_{L,i}, Y_{L,i}) and V_{ego} into X_{L} and concatenating right lane input vectors (X_{R,i}, Y_{R,i}) and V_{ego} into X_{R}.

Step 620 may be followed by step 630 of calculating lane perception fields f_{θ}(X_{L}) and f_{θ}(X_{R}). This is done by one or more NNs.

Step 630 may be followed by step 640 of constructing a differential equation that describes ego acceleration applied on the ego vehicle: a = f_{θ}(X_{L})+ f_{θ}(X_{R}).

This may be the output of the inference process. Step 640 may be followed by step 450 (not shown).

Method 600 may also include step 670 of applying RL to evaluate the perception fields by implementing the acceleration in a simulated environment and evaluating the outcome - for example by applying a reward function. The evaluating may include determining to update the perception fields - by updating the weights of the one or more NNs (for example in order to maximize average reward). Step 670 may include using any RL algorithm - for example PPO, SAC, TD3 and the like.

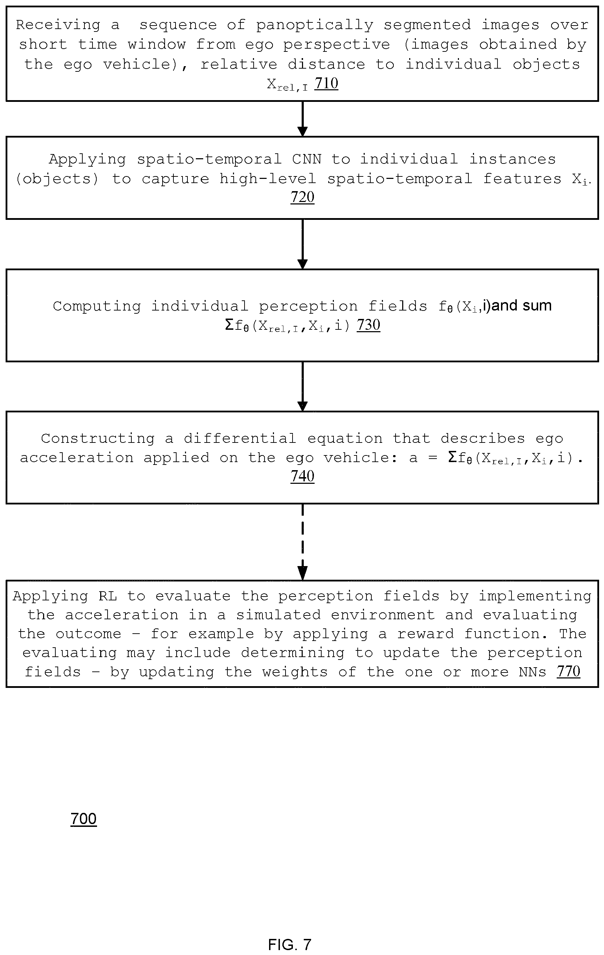

Figure 7 illustrates method 700 for multi-object RL with visual input.

Step 710 of method 700 may include receiving a sequence of panoptically segmented images over short time window from ego perspective (images obtained by the ego vehicle), relative distance to individual objects X_{rel,i}.

Step 710 may be followed by step 720 of applying spatio-temporal CNN to individual instances (objects) to capture high-level spatio-temporal features Xᵢ.

Step 720 may be followed by step 730 of computing individual perception fields fe(Xᵢ,i)and sum Σf_{θ}(X_{rel,I},Xᵢ,i).

Step 730 may be followed by step 740 of constructing a differential equation that describes ego acceleration applied on the ego vehicle: a = Σf_{θ}(X_{rel,I},Xᵢ,i) .

This may be the output of the inference process. Step 740 may be followed by step 450 (not shown).

Method 700 may also include step 770 of applying RL to evaluate the perception fields by implementing the acceleration in a simulated environment and evaluating the outcome - for example by applying a reward function. The evaluating may include determining to update the perception fields - by updating the weights of the one or more NNs (for example in order to maximize average reward). Step 770 may include using any RL algorithm - for example PPO, SAC, TD3 and the like.

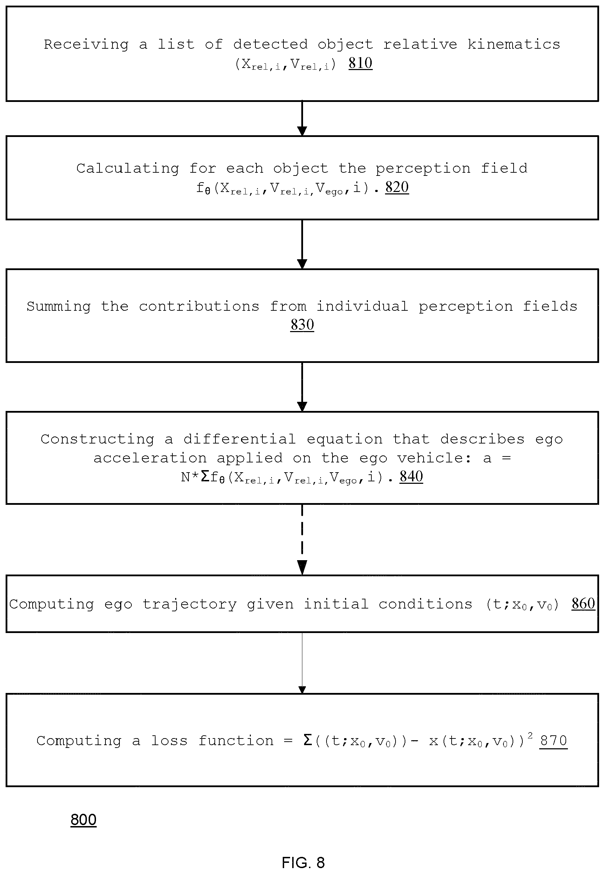

Figure 8 illustrates method 800 for multi-object BC with kinematics input.

Step 810 of method 800 may include receiving a list of detected object relative kinematics (X_{rei,i},V_{rei,i}) wherein X_{rel,i} is a relative location of detected object i-in relation to the ego vehicle and V_{rel,i} is a relative velocity of detected object i- in relation to the ego vehicle. Also receiving the ego vehicle velocity V_{ego}.

Step 810 may be followed by step 820 of calculating for each object the perception field f_{θ}(X_{rel,i},V_{rel,i},V_{ego},i) .

Step 820 may be followed by step 830 of summing the contributions from individual perception fields. Step 830 may also include normalizing so that the magnitude of the resulting 2d vector is equal to the highest magnitude of the individual terms : N*Σf_{θ}(X_{rel,i},V_{rel,i},V_{ego},i).

Step 830 may be followed by step 840 of constructing a differential equation that describes ego acceleration applied on the ego vehicle: a = N*Σf_{θ}(X_{rel,i},V_{rel,i},V_{ego},i).

This may be the output of the inference process. Step 840 may be followed by step 450 (not shown).

The method may include updating the one or more network parameters.

The method may include step 860 of computing ego trajectory given initial conditions *X̂*(t;x₀,v₀). This may include applying the acceleration to the initial conditions to determine the next condition.

Step 860 may be followed by step 870 of computing a loss function = Σ(***X̂***(t;x₀,v₀)) - x(t;x₀,v₀))². The loss calculated in step 870 may be propagated - to change at least some of the weights of the one or more NNs used during step 820.

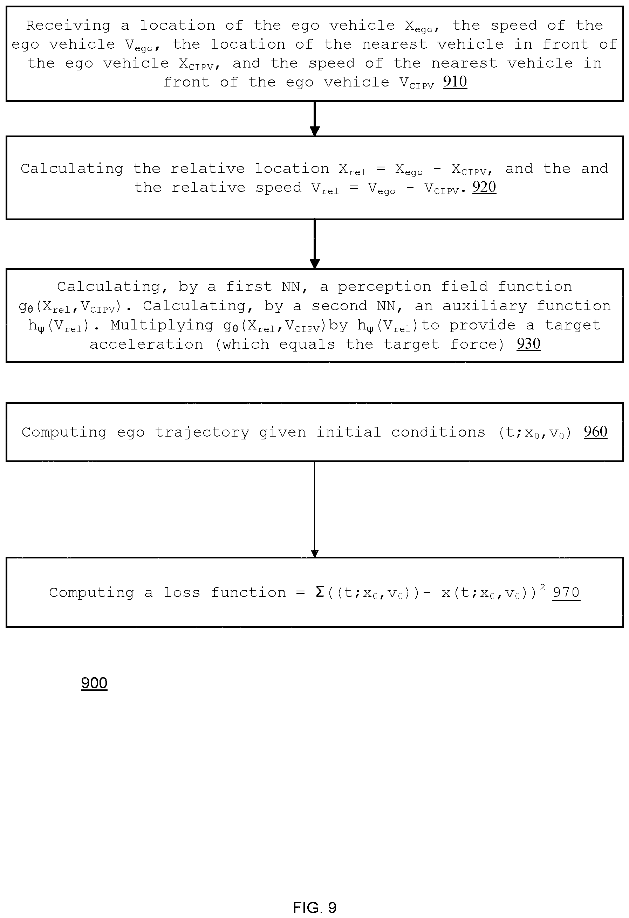

Figure 9 illustrates method 900 inference with the addition of a loss function for an adaptive cruise control model implemented with kinematic variables as inputs.

Step 910 of method 900 may include receiving a location of the ego vehicle X_{ego}, the speed of the ego vehicle V_{ego}, the location of the nearest vehicle in front of the ego vehicle X_{CIPV}, and the speed of the nearest vehicle in front of the ego vehicle V_{CIPV}.

Step 910 may be followed by step 920 of calculating the relative location Xᵣₑₗ = X_{ego} - X_{CIPV}, and the and the relative speed Vᵣₑₗ = V_{ego} - V_{CIPV}.

Step 920 may be followed by step 930 of:
- Calculating, by a first NN, a perception field function g_{θ}(Xᵣₑₗ,V_{CIPV}).
- Calculating, by a second NN, an auxiliary function h_{ψ}(Vᵣₑₗ).
- Multiplying g_{θ}(Xᵣₑₗ, V_{CIPV}) by h_{ψ}(Vᵣₑₗ) to provide a target acceleration (which equals the target force).

This may be the output of the inference process. Step 930 may be followed by step 450 (not shown).

The method may include updating the one or more NN parameters.

The method may include step 960 of computing ego trajectory given initial conditions ***X̂***(t;x₀,v₀).

Step 960 may be followed by step 970 of computing a loss function = Σ(***X̂***(t;x₀,v₀))- x(t;x₀,v₀))². And having the loss propagated - to change at least some of the weights of the one or more NNs used during step 930.

In the foregoing specification, the invention has been described with reference to specific examples of embodiments of the invention. It will, however, be evident that various modifications and changes may be made therein without departing from the broader spirit and scope of the invention as set forth in the appended claims. Moreover, the terms "front," "back," "top," "bottom," "over," "under" and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein. Furthermore, the terms "assert" or "set" and "negate" (or "deassert" or "clear") are used herein when referring to the rendering of a signal, status bit, or similar apparatus into its logically true or logically false state, respectively. If the logically true state is a logic level one, the logically false state is a logic level zero. And if the logically true state is a logic level zero, the logically false state is a logic level one. Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures may be implemented which achieve the same functionality. Any arrangement of components to achieve the same functionality is effectively "associated" such that the desired functionality is achieved. Hence, any two components herein combined to achieve a particular functionality may be seen as "associated with" each other such that the desired functionality is achieved, irrespective of architectures or intermedial components. Likewise, any two components so associated can also be viewed as being "operably connected," or "operably coupled," to each other to achieve the desired functionality. Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also for example, in one embodiment, the illustrated examples may be implemented as circuitry located on a single integrated circuit or within a same device. Alternatively, the examples may be implemented as any number of separate integrated circuits or separate devices interconnected with each other in a suitable manner. However, other modifications, variations and alternatives are also possible. The specifications and drawings are, accordingly, to be regarded in an illustrative rather than in a restrictive sense. In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage. While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention. It is appreciated that various features of the embodiments of the disclosure which are, for clarity, described in the contexts of separate embodiments may also be provided in combination in a single embodiment. Conversely, various features of the embodiments of the disclosure which are, for brevity, described in the context of a single embodiment may also be provided separately or in any suitable sub-combination. It will be appreciated by persons skilled in the art that the embodiments of the disclosure are not limited by what has been particularly shown and described hereinabove. Rather the scope of the embodiments of the disclosure is defined by the appended claims and equivalents thereof.

## Claims

1. A method (400) for perception fields driving related operations, the method comprises:
obtaining (420) object information regarding objects located within an environment of a vehicle;
determining (431), by a processor that comprises a processing circuitry, a situation of the vehicle, based on the object information;
selecting (432), by the processor, a neural network of a group of neural networks, based on the situation;
determining (440), by the processor, using the neural network, virtual forces that are applied on the vehicle, wherein the virtual forces represent impacts of the objects on a behavior of the vehicle; wherein the virtual forces belong to a virtual physical model;
wherein the latter determining comprises:
calculating, based on the virtual forces applied on the vehicle, a total virtual force that is applied on the vehicle; and
determining a desired virtual acceleration of the vehicle based on a total virtual acceleration that is applied on the vehicle by the total virtual force.

2. The method (400) according to claim 1, further comprising performing (450) one or more driving related operations of the vehicle based on the one or more virtual forces.

3. The method (400) according to claim 2, wherein the performing (450) of the one or more driving related operations of the vehicle comprises setting, without human driver involvement, an acceleration of the vehicle to the desired virtual acceleration.

4. The method (400) according to claim 2, wherein the performing one or more driving related operations of the vehicle comprising suggesting to a driver to set an acceleration of the vehicle to the desired virtual acceleration.

5. The method (400) according to claim 2, wherein the performing one or more driving related operations of the vehicle comprises changing a direction of propagation of the vehicle.

6. The method (400) according to claim 1, further comprising feeding (433) the neural network with situation metadata.

7. The method according to claim 1, wherein the neural network was trained to map the object information to the virtual forces using at least one of reinforcement learning and behavioral cloning.

8. The method (400) according to claim 1, wherein the neural network was trained to map the object information to the one or more virtual forces using reinforcement learning that has a reward function that is defined using behavioral cloning.

9. The method (400) according to claim 1, wherein the neural network was trained to map the object information to the one or more virtual forces using a reinforcement learning that has an initial policy that is defined using behavioral cloning.

10. The method (400) according to claim 1, wherein the neural network was trained to map the object information to one or more perception fields and one or more virtual physical model functions that differ from the one or more perception field.

11. The method (400) according to claim 1, wherein the selecting comprises selecting a first neural network and a second neural network, wherein the first neural network is trained to map the object information to one or more perception fields and the second neural network is trained to map the object information to one or more virtual physical model functions.

12. A non-transitory computer readable medium for perception fields driving related operations, the non-transitory computer readable medium stores instructions for:
obtaining (420) object information regarding objects located within an environment of a vehicle;
determining (431) by a processor that comprises a processing circuitry, a situation of the vehicle, based on the object information;
selecting (432), by the processor, a neural network of a group of neural networks, based on the situation; and
determining (440), using the neural network, virtual forces that are applied on the vehicle, wherein the virtual forces represent impacts of the objects on a behavior of the vehicle; wherein the virtual forces belong to a virtual physical model;
wherein the latter determining comprises:
calculating, based on the virtual forces applied on the vehicle, a total virtual force that is applied on the vehicle; and
determining a desired virtual acceleration of the vehicle based on a total virtual acceleration that is applied on the vehicle by the total virtual force.

13. The method (400) according to claim 2, wherein the performing (450) of the one or more driving related operations of the vehicle comprises momentarily taking control over the vehicle.

14. The method (400) according to claim 1, wherein the desired virtual acceleration of the vehicle equals the total virtual acceleration.

15. The method (400) according to claim 1, wherein the desired virtual acceleration of the vehicle differs from the total virtual acceleration.

## Patentansprüche

1. Verfahren (400) für fahrbezogene Wahrnehmungsfeldvorgänge, wobei das Verfahren Folgendes umfasst:
Erhalten (420) von Objektinformationen, die Objekte betreffen, die sich in einer Umgebung eines Fahrzeugs befinden;
Bestimmen (431) einer Situation des Fahrzeugs, basierend auf den Objektinformationen, durch einen Prozessor, der eine Verarbeitungsschaltung umfasst;
Auswählen (432) eines neuronalen Netzwerks einer Gruppe neuronaler Netzwerke, basierend auf der Situation, durch den Prozessor;
Bestimmen (440) virtueller Kräfte, die auf das Fahrzeug ausgeübt werden, durch den Prozessor unter Nutzung des neuronalen Netzwerks, wobei die virtuellen Kräfte Auswirkungen der Objekte auf ein Verhalten des Fahrzeugs darstellen, wobei die virtuellen Kräfte zu einem virtuellen physischen Modell gehören;
wobei das letztere Bestimmen Folgendes umfasst:
Berechnen einer virtuellen Gesamtkraft, die auf das Fahrzeug ausgeübt wird, basierend auf den virtuellen, auf das Fahrzeug ausgeübten Kräften, und
Bestimmen einer gewünschten virtuellen Beschleunigung des Fahrzeugs, basierend auf einer virtuellen Gesamtbeschleunigung, die durch die virtuelle Gesamtkraft auf das Fahrzeug angewandt wird.

2. Verfahren (400) nach Anspruch 1, zudem umfassend das Durchführen (450) von einem oder mehreren fahrbezogenen Vorgängen des Fahrzeugs, basierend auf der einen oder den mehreren virtuellen Kräften.

3. Verfahren (400) nach Anspruch 2, wobei das Durchführen (450) des einen oder der mehreren fahrbezogenen Vorgänge des Fahrzeugs das Einstellen einer Beschleunigung des Fahrzeugs auf die gewünschte virtuelle Beschleunigung ohne Beteiligung des menschlichen Fahrers umfasst.

4. Verfahren (400) nach Anspruch 2, wobei das Durchführen von einem oder mehreren fahrbezogenen Vorgängen des Fahrzeugs umfasst, dass einem Fahrer empfohlen wird, eine Beschleunigung des Fahrzeugs auf die gewünschte virtuelle Beschleunigung einzustellen.

5. Verfahren (400) nach Anspruch 2, wobei das Durchführen von einem oder mehreren fahrbezogenen Vorgängen des Fahrzeugs das Verändern einer Laufrichtung des Fahrzeugs umfasst.

6. Verfahren (400) nach Anspruch 1, zudem umfassend das Füttern (433) des neuronalen Netzwerks mit Situationsmetadaten.

7. Verfahren nach Anspruch 1, wobei das neuronale Netzwerk geschult wurde, um die Objektinformationen unter Nutzung von mindestens dem bestärkenden Lernen und/oder dem Verhaltensklonen den virtuellen Kräften zuzuordnen.

8. Verfahren (400) nach Anspruch 1, wobei das neuronale Netzwerk geschult wurde, um die Objektinformationen unter Nutzung des bestärkenden Lernens, das eine rückwirkende Funktion aufweist, die unter Nutzung von Verhaltensklonen definiert wird, der einen oder den mehreren virtuellen Kräften zuzuordnen.

9. Verfahren (400) nach Anspruch 1, wobei das neuronale Netzwerk geschult wurde, um die Objektinformationen unter Nutzung eines bestärkenden Lernens, das eine anfängliche Strategie aufweist, die unter Nutzung von Verhaltensklonen definiert wird, der einen oder den mehreren virtuellen Kräften zuzuordnen.

10. Verfahren (400) nach Anspruch 1, wobei das neuronale Netzwerk geschult wurde, um die Objektinformationen einem oder mehreren Wahrnehmungsfeldern und einem oder mehreren virtuellen physischen Modellfunktionen, die sich von dem einen oder den mehreren Wahrnehmungsfeldern unterscheiden, zuzuordnen.

11. Verfahren (400) nach Anspruch 1, wobei das Auswählen das Auswählen eines ersten neuronalen Netzwerks und eines zweiten neuronalen Netzwerks umfasst, wobei das erste neuronale Netzwerk geschult wird, um die Objektinformationen einem oder mehreren Wahrnehmungsfeldern zuzuordnen, und das zweite neuronale Netzwerk geschult wird, um die Objektinformationen einer oder mehreren virtuellen physischen Modellfunktionen zuzuordnen.

12. Nicht flüchtiges computerlesbares Medium für fahrbezogene Wahrnehmungsfeldvorgänge, wobei das nicht flüchtige computerlesbare Medium Befehle speichert zum:
Erhalten (420) von Objektinformationen, die Objekte betreffen, die sich in einer Umgebung eines Fahrzeugs befinden;
Bestimmen (431) einer Situation des Fahrzeugs, basierend auf den Objektinformationen, durch einen Prozessor, der eine Verarbeitungsschaltung umfasst;
Auswählen (432) eines neuronalen Netzwerks einer Gruppe neuronaler Netzwerke, basierend auf der Situation, durch den Prozessor, und
Bestimmen (440) virtueller Kräfte, die auf das Fahrzeug ausgeübt werden, unter Nutzung des neuronalen Netzwerks, wobei die virtuellen Kräfte Auswirkungen der Objekte auf ein Verhalten des Fahrzeugs darstellen, wobei die virtuellen Kräfte zu einem virtuellen physischen Modell gehören;
wobei das letztere Bestimmen Folgendes umfasst:
Berechnen einer virtuellen Gesamtkraft, die auf das Fahrzeug ausgeübt wird, basierend auf den virtuellen, auf das Fahrzeug ausgeübten Kräften, und
Bestimmen einer gewünschten virtuellen Beschleunigung des Fahrzeugs, basierend auf einer virtuellen Gesamtbeschleunigung, die durch die virtuelle Gesamtkraft auf das Fahrzeug angewandt wird.

13. Verfahren (400) nach Anspruch 2, wobei das Durchführen (450) des einen oder der mehreren fahrbezogenen Vorgänge des Fahrzeugs die kurzzeitige Übernahme der Kontrolle über das Fahrzeug umfasst.

14. Verfahren (400) nach Anspruch 1, wobei die gewünschte virtuelle Beschleunigung des Fahrzeugs gleich der virtuellen Gesamtbeschleunigung ist.

15. Verfahren (400) nach Anspruch 1, wobei sich die gewünschte virtuelle Beschleunigung des Fahrzeugs von der virtuellen Gesamtbeschleunigung unterscheidet.

## Revendications

1. Procédé (400) pour des opérations liées à la conduite par l'intermédiaire de champs de perception, le procédé comprend :
obtenir (420) des informations d'objet concernant des objets situés au sein d'un environnement d'un véhicule ;
déterminer (431), par un processeur qui comprend une circuiterie de traitement, une situation du véhicule, sur la base des informations d'objet ;
sélectionner (432), par le processeur, un réseau neuronal d'un groupe de réseaux neuronaux, sur la base de la situation ;
déterminer (440), par le processeur, à l'aide du réseau neuronal, les forces virtuelles étant appliquées au véhicule, dans lequel les forces virtuelles représentent les impacts des objets sur un comportement du véhicule ; dans lequel les forces virtuelles appartiennent à un modèle physique virtuel ;
dans lequel la dernière détermination comprend :
calculer, sur la base des forces virtuelles appliquées au véhicule, une force virtuelle totale étant appliquée au véhicule ; et
déterminer une accélération virtuelle souhaitée du véhicule sur la base d'une accélération virtuelle totale étant appliquée au véhicule par la force virtuelle totale.

2. Procédé (400) selon la revendication 1, comprenant de plus l'exécution (450) d'une ou plusieurs opérations liées à la conduite du véhicule sur la base d'une ou plusieurs forces virtuelles.

3. Procédé (400) selon la revendication 2, dans lequel l'exécution (450) de l'une ou plusieurs opérations liées à la conduite du véhicule comprend le réglage, sans implication du conducteur humain, d'une accélération du véhicule à l'accélération virtuelle souhaitée.

4. Procédé (400) selon la revendication 2, dans lequel l'exécution d'une ou de plusieurs opérations liées à la conduite du véhicule comprend la suggestion au conducteur de régler une accélération du véhicule sur l'accélération virtuelle souhaitée.

5. Procédé (400) selon la revendication 2, dans lequel l'exécution d'une ou de plusieurs opérations liées à la conduite du véhicule comprend le changement d'une direction de propagation du véhicule.

6. Procédé (400) selon la revendication 1, comprenant de plus l'alimentation (433) du réseau neuronal avec des métadonnées de situation.

7. Procédé selon la revendication 1, dans lequel le réseau neuronal a été entraîné à mapper les informations d'objet aux forces virtuelles en utilisant au moins un procédé parmi l'apprentissage par renforcement et le clonage comportemental.

8. Procédé (400) selon la revendication 1, dans lequel le réseau neuronal a été entraîné à mapper les informations d'objet à l'une ou plusieurs forces virtuelles à l'aide de l'apprentissage par renforcement qui a une fonction de récompense étant définie à l'aide du clonage comportemental.

9. Procédé (400) selon la revendication 1, dans lequel le réseau neuronal a été entraîné à mapper les informations d'objet à l'une ou plusieurs forces virtuelles en utilisant un apprentissage par renforcement qui a une politique initiale étant définie à l'aide du clonage comportemental.

10. Procédé (400) selon la revendication 1, dans lequel le réseau neuronal a été entraîné à mapper les informations d'objet à un ou plusieurs champs de perception et à une ou plusieurs fonctions de modèle physique virtuel qui diffèrent de l'un ou plusieurs champs de perception.

11. Procédé (400) selon la revendication 1, dans lequel la sélection comprend la sélection d'un premier réseau neuronal et d'un deuxième réseau neuronal, dans lequel le premier réseau neuronal est entraîné pour mapper les informations d'objet à un ou plusieurs champs de perception et le deuxième réseau neuronal est entraîné pour mapper les informations d'objet à une ou plusieurs fonctions de modèle physique virtuel.

12. Support informatique lisible non transitoire pour les opérations liées à la conduite par l'intermédiaire de champs de perception, le support informatique lisible non transitoire stocke des instructions pour :
obtenir (420) des informations d'objet concernant des objets situés au sein d'un environnement d'un véhicule ;
déterminer (431), par un processeur qui comprend une circuiterie de traitement, une situation du véhicule, sur la base des informations d'objet ;
sélectionner (432), par le processeur, un réseau neuronal d'un groupe de réseaux neuronaux, sur la base de la situation ; et
déterminer (440), à l'aide du réseau neuronal, les forces virtuelles étant appliquées au véhicule, dans lequel les forces virtuelles représentent les impacts des objets sur un comportement du véhicule ; dans lequel les forces virtuelles appartiennent à un modèle physique virtuel ;
dans lequel la dernière détermination comprend :
calculer, sur la base des forces virtuelles appliquées au véhicule, une force virtuelle totale étant appliquée au véhicule ; et
déterminer une accélération virtuelle souhaitée du véhicule sur la base d'une accélération virtuelle totale étant appliquée au véhicule par la force virtuelle totale.

13. Procédé (400) selon la revendication 2, dans lequel l'exécution (450) de l'une ou plusieurs opérations liées à la conduite du véhicule comprend la prise de contrôle momentanée du véhicule.

14. Procédé (400) selon la revendication 1, dans lequel l'accélération virtuelle souhaitée du véhicule est égale à l'accélération virtuelle totale.

15. Procédé (400) selon la revendication 1, dans lequel l'accélération virtuelle souhaitée du véhicule diffère de l'accélération virtuelle totale.
